# EUROPÄISCHE PATENTSCHRIFT

(11) **EP 3 035 180 B1**
(45) Veröffentlichungstag und Bekanntmachung des Hinweises auf die Patenterteilung: **08.08.2018**
(21) Anmeldenummer: 15170324.6
(22) Anmeldetag: 02.06.2015
(51) Int. Cl.: G06F 3/01, G06F 3/0488, G06F 3/0484

(54) **VORRICHTUNG FÜR EINE KLIMASTEUERUNG, FAHRZEUG, VERFAHREN UND COMPUTERPROGRAMM ZUR BEREITSTELLUNG EINES VIDEO- UND STEUERSIGNALS**
DEVICE FOR CONTROLLING A CLIMAT CONTROL SYSTEM, VEHICLE, METHOD AND COMPUTER PROGRAM FOR PROVIDING A VIDEO AND CONTROL SIGNAL
DISPOSITIF POUR LA COMMANDE DE CLIMATISATION, VÉHICULE, PROCÉDÉ ET PROGRAMME INFORMATIQUE DESTINÉ À LA FOURNITURE D'UN SIGNAL VIDÉO ET DE COMMANDE

(30) Priorität: 17.12.2014 DE 102014226213
(43) Veröffentlichungstag der Anmeldung: 22.06.2016
(73) Patentinhaber: Volkswagen Aktiengesellschaft, 38440 Wolfsburg (DE)
(72) Erfinder: Jun, Mi-Ran, 10965 Berlin (DE)

(56) Entgegenhaltungen:
- WO-A1-2014/016256
- US-A1- 2004 141 634
- US-A1- 2011 035 700
- US-A1- 2011 082 627
- US-A1- 2014 258 899

## Beschreibung

Ausführungsbeispiele betreffen eine Vorrichtung für eine Klimasteuerung in einem Fahrzeug gemäß Anspruch 1, ein Verfahren zur Klimasteuerung in einem Fahrzeug gemäß Anspruch 12 und ein Programm mit einem Programmcode gemäß Anspruch 13. Steuerungs- und Informationswiedergabesysteme, welche beispielsweise auf Berührungsempfindlichen Bildschirmen basieren, nehmen in modernen Fahrzeugen oft eine zentrale Stellung ein. Oft werden viele Funktionen des Fahrzeugs, etwa eine Darstellung von Informationen über das Fahrzeug, eine Wiedergabe von Medien, eine Klimasteuerung, eine Steuerung von Fahrzeugfunktionen, eine Bereitstellung von Karteninformationen, oder eine Steuerung einer Freisprecheinrichtung über Steuerungs- und Informationswiedergabesysteme bereitgestellt. Dabei nimmt eine intuitive Bedienbarkeit des Systems und Darstellung der Informationen häufig eine große Rolle ein, da Ablenkungen und weniger intuitive Bedienungen und Darstellungen häufig die Konzentration des Fahrers und damit die Fahrsicherheit beeinträchtigen können.

Klimasteuerungen von Fahrzeugen umfassen häufig eine Vielzahl von Funktionen. Beispielsweise umfasst eine Klimasteuerung etwa die Steuerung von Temperatur und Belüftung. Diese Steuerung kann in vielen Fällen etwa für das gesamte Fahrzeug vorgenommen werden, für einzelne Sitze, für Teilbereiche des Fahrzeugs, für einzelne Komponenten des Fahrzeugs, etwa für Scheiben, oder basierend auf einzelnen Komponenten, etwa Sitzheizungen und Sitzlüftungen. Durch die Vielzahl an verschiedenen Funktionen kann eine Klimasteuerung viele Bedienelemente umfassen, was häufig zu einer komplexen und/oder unübersichtlichen Bedienung führen kann, welche die Konzentration des Fahrers und damit die Fahrsicherheit weiter beeinträchtigen kann.

Die US-Patentanmeldung US 2011/082627 A1 zeigt ein Verfahren zum Betreiben einer Fahrzeugbenutzerschnittstelle mit einem Touchscreen, der in dem Fahrzeug angebracht ist. In manchen Aspekten können sich visuelle oder visuell-interaktive Eigenschaften der Fahrzeugbenutzerschnittstelle ändern, wenn der Benutzer mit der Fahrzeugbenutzerschnittstelle interagiert.

Das US- Patentanmeldung US 2004/0141634 A1 zeigt ein Handgestensteuergerät, das Handgesten anhand eines Bilds einer Hand in einer Bildaufnahmezone erkennt. Basierend auf der Geste werden steuerbare Objekte eines Fahrzeugs ausgewählt und gesteuert.

Es besteht daher der Bedarf, ein Konzept für eine Klimasteuerung bereitzustellen, das eine Verbesserung der Sicherheit der Nutzung eines Fahrzeugs bei Verwendung der Klimasteuerung ermöglicht.

Diesem Bedarf wird durch eine Vorrichtung für eine Klimasteuerung gemäß Anspruch 1, ein Verfahren gemäß Anspruch 12 und ein Programm mit einem Programmcode gemäß Anspruch 13 Rechnung getragen. Weitere Aspekte sind in den abhängigen Ansprüchen definiert. Vorteilhafe Ausgestaltungen werden nachfolgend anhand der in den Zeichnungen dargestellten Beispiele auf welche Beispiele generell jedoch nicht insgesamt beschränkt sind, näher beschrieben. Es zeigen:
- Fig. 1: illustriert ein Blockdiagramm eines Ausführungsbeispiels eine Vorrichtung zur Klimasteuerung in einem Fahrzeug;
- Fig. 2: zeigt eine beispielhafte Darstellung eines Anzeigebereichs, welcher eine repräsentierende Darstellung einer einstellbaren Funktion und eine repräsentierende Darstellung eines Werts einer einstellbaren Funktion umfasst;
- Fig. 3: zeigt eine beispielhafte Darstellung eines Anzeigebereichs, welcher mehrere repräsentierende Darstellungen von einstellbaren Funktionen umfasst;
- Fig. 4: zeigt eine beispielhafte Darstellung eines Anzeigebereichs, welcher eine repräsentierende Darstellung einer Auswahl einer einstellbaren Funktion umfasst;
- Fig. 5: zeigt eine beispielhafte Darstellung eines Anzeigebereichs, welcher mehrere repräsentierende Darstellungen von einstellbaren Funktionen und repräsentierende Darstellungen von Werten von einstellbaren Funktionen umfasst;
- Fig. 6: zeigt eine beispielhafte Darstellung eines Anzeigebereichs, welcher mehrere repräsentierende Darstellungen von einstellbaren Funktionen und repräsentierende Darstellungen von Werten von einstellbaren Funktionen umfasst;
- Fig.7: illustriert ein Blockdiagramm eines Ausführungsbeispiels eines Fahrzeugs, welches eine Vorrichtung zur Klimasteuerung und eine Anzeigeeinrichtung umfasst; und
- Fig. 8: zeigt ein Flussdiagramm eines Verfahrens zur Klimasteuerung in einem Fahrzeug.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben.

Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

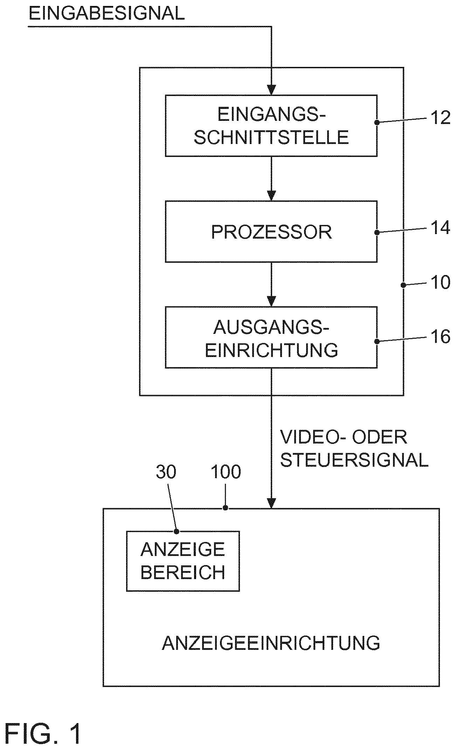

Fig. 1 illustriert ein Blockdiagramm eines Beispiels einer Vorrichtung 10 zur Klimasteuerung in einem Fahrzeug. Die Vorrichtung umfasst eine Eingangsschnittstelle 12, die ausgebildet ist, um ein Eingabesignal zu empfangen. Das Eingabesignal umfasst Information über zumindest eine Position einer Berührung einer Anzeigeeinrichtung 100 oder Information über eine berührungslose Geste. Die Vorrichtung 10 umfasst ferner einen Prozessor 14, der ausgebildet ist, um ein Video- oder Steuersignal zu erzeugen, sodass ein Anzeigebereich 30 durch die Anzeigeeinrichtung 100 wiedergebbar ist. Der Prozessor 14 ist ferner ausgebildet, um basierend auf dem Eingabesignal eine Bewegung relativ zum Anzeigebereich 30 zu bestimmen. Der Prozessor 14 ist ferner ausgebildet, basierend auf einer in einer ersten Richtung bestimmten Bewegung eine einstellbare Funktion einer Mehrzahl von einstellbaren Funktionen einer Klimasteuerung des Fahrzeugs auszuwählen. Der Prozessor 14 ist ferner ausgebildet, um basierend auf einer in einer im Wesentlichen zur ersten Richtung orthogonalen zweiten Richtung bestimmten Bewegung einen Wert der ausgewählten einstellbaren Funktion einzustellen. Die Vorrichtung 10 umfasst ferner eine Ausgangseinrichtung 16, die ausgebildet ist, um das Video- oder Steuersignal der Anzeigeeinrichtung 100 bereitzustellen. Der Prozessor 14 ist mit der Eingangsschnittstelle 12 und mit der Ausgangseinrichtung 16 gekoppelt.

In zumindest manchen Beispielen kann die Klimasteuerung eine Steuerung von Klimafunktionen des Fahrzeugs umfassen. Die Klimafunktionen können beispielsweise die Heizung oder Kühlung des Fahrzeugs umfassen, oder die Steuerung einer Belüftung des Fahrzeugs. Die Heizung oder Kühlung kann sich dabei beispielsweise auf die Umgebungstemperatur des Fahrzeugs oder eines Teilbereichs des Fahrzeugs beziehen, oder auf einer Heizung oder Kühlung durch eine Komponente des Fahrzeugs, beispielsweise durch eine Sitzheizung. Das Fahrzeug kann beispielsweise einem Kraftfahrzeug entsprechen, beispielsweise einem Automobil, einem Transporter, einem Omnibus, einem Lastkraftwagen oder einem weiteren Landfahrzeug. Beispielsweise könnte das Fahrzeug auch einem Luftfahrzeug, einem Wasserfahrzeug, etwa einem Schiff, oder einem Schienenfahrzeug entsprechen.

Der Anzeigebereich 30 kann beispielsweise Bedienelemente der Klimasteuerung oder Informationen über die Klimasteuerung umfassen, beispielsweise repräsentierende Darstellungen der einstellbaren Funktionen und/oder repräsentierende Darstellung des eingestellten Werts der ausgewählten einstellbaren Funktion. In zumindest manchen Beispielen kann der Anzeigebereich 30 den vollständigen Bildbereich der Anzeigeeinrichtung 100 einnehmen. Alternativ kann der Anzeigebereich auch einen Teil der Anzeigeeinrichtung 100 einnehmen, etwa 50%, 60%, 70%, 80%, 90%. Zusätzlich zum Anzeigebereich 30 kann die Anzeigebereich beispielsweise Schaltflächen umfassen zum Wechsel zu verschiedenen Funktionen eines Informationswiedergabesystems des Fahrzeugs, welches die Anzeigeeinrichtung 100 umfassen kann. In einigen Beispielen könnte der Anzeigebereich 30 beispielsweise bei Auswahl einer einstellbaren Funktion der Mehrzahl von einstellbaren Funktionen oder bei Einstellen eines Werts der einstellbaren Funktion ausschließlich repräsentierende Darstellungen von Funktionen, Werten oder Klimainformationen der Klimasteuerung darstellen.

In zumindest manchen Beispielen kann die Bewegung relativ zum Anzeigebereich 30 einer Wischbewegung auf der Anzeigeeinrichtung 100 oder einer berührungslosen Geste von Benutzer aus gesehen vor der Anzeigeeinrichtung 100 entsprechen. Die Bewegung kann beispielsweise im Wesentlichen in vom Benutzer aus gesehen horizontaler oder vertikaler Richtung erfolgen. Der Prozessor 14 kann ausgebildet sein, eine Richtung für die bestimmte Bewegung zu bestimmen. Die bestimmte Richtung kann beispielsweise einem Gradmaß relativ zur Anzeigeeinrichtung 100 entsprechen, oder der Prozessor 14 kann ausgebildet sein, die bestimmte Richtung in Kategorien aufteilen, etwa in die Kategorien Horizontal und Vertikal, und vom Benutzer aus gesehen nach rechts, nach links, nach oben oder nach unten. Der Prozessor 14 kann ausgebildet sein, die Richtung basierend auf Richtungsgrenzwerten zu bestimmen, beispielsweise basierend auf einem horizontalen Veränderungsgrenzwert oder einem vertikalen Veränderungsgrenzwert.

Die Information über die zumindest eine Position der Berührung kann beispielsweise Information über eine Startposition und Information über eine Endposition der Berührung umfassen. Der Prozessor 14 kann ausgebildet sein, die Richtung basierend auf der Information über die Startposition und der Information über die Endposition zu bestimmen, etwa basierend auf einem Vektor basierend auf der Startposition und der Endposition. In einigen Beispielen kann die Information über die zumindest eine Position der Berührung weitere Berührungspunkte umfassen. Der Prozessor 14 kann ausgebildet sein, die Richtung basierend auf den weiteren Berührungspunkten zu bestimmen oder zu verfeinern. In manchen Beispielen kann die Information über die zumindest eine Position der Berührung oder die Information über die berührungslose Geste Information über einen Bewegungsvektor umfassen. Der Prozessor 14 kann ausgebildet sein, die Richtung basierend auf dem Bewegungsvektor zu bestimmen.

In zumindest einigen Beispielen kann die erste Richtung einer vom Benutzer aus gesehen horizontalen Richtung entsprechen. Die zweite Richtung kann einer vom Benutzer aus gesehen vertikalen Richtung entsprechen. Alternativ kann die erste Richtung einer vom Benutzer aus gesehen vertikalen Richtung entsprechen. Die zweite Richtung kann einer vom Benutzer aus gesehen horizontalen Richtung entsprechen. In einigen Beispielen kann die im Wesentlichen Orthogonale Beziehung zwischen der ersten Richtung und der zweiten Richtung eine Toleranz aufweisen, beispielsweise können die Richtungen bis zu einem Grenzwert von der Orthogonalität abweichen. Beispielsweise kann die Orthogonalität auf der Einteilung in Kategorien basieren.

In zumindest manchen Beispielen kann die erste Richtung einer vom Benutzer aus gesehen horizontalen Richtung entsprechen. Die zweite Richtung kann einer vom Benutzer aus gesehen vertikalen Richtung entsprechen. Der Prozessor 14 kann beispielsweise ausgebildet sein, den Wert der ausgewählten einstellbaren Funktion basierend auf einer vom Benutzer aus gesehen nach oben gerichteten Bewegung zu erhöhen und den Wert der ausgewählten einstellbaren Funktion basierend auf einer vom Benutzer aus gesehen nach unten gerichteten Bewegung zu verringern, beispielsweise durch Manipulation eines auf dem Anzeigebereich dargestellten Balkendiagramms oder dargestellten Schiebereglers. In manchen Beispielen der Prozessor 14 ausgebildet sein, den Wert schneller oder in größeren Schritten bei einer schnelleren erkannten Bewegung zu verändern. Der Prozessor kann ausgebildet sein, den Wert langsamer oder in kleineren Schritten bei einer langsameren erkannten Bewegung zu verändern. In einigen Beispielen kann der Prozessor 14 ausgebildet sein, den Wert der ausgewählten einstellbaren Funktion basierend auf einer vom Benutzer aus gesehen nach unten gerichtete Bewegung zu erhöhen, beispielsweise über ein dargestelltes virtuelles Einstellrad, und den Wert der ausgewählten einstellbaren Funktion basierend auf einer vom Benutzer aus gesehen nach oben gerichteten Bewegung zu verringern.

In zumindest manchen Beispielen kann die Mehrzahl von auswählbaren Funktionen zumindest ein Element der Gruppe von Gesamtklima des Fahrzeugs, Teilbereichsklima des Fahrzeugs, Gesamttemperatur des Fahrzeugs, Teilbereichstemperatur des Fahrzeugs, Gesamtlüftung des Fahrzeugs, Teilbereichslüftung des Fahrzeugs, Scheibenheizung des Fahrzeugs, Scheibenlüftung des Fahrzeugs, Sitzheizung des Fahrzeugs und Sitzlüftung des Fahrzeugs umfassen. Der einzustellende Wert der ausgewählten einstellbaren Funktion kann beispielsweise einer Temperatur, einer Heizintensität, einer Kühlintensität, oder einer Lüftungsintensität entsprechen.

Die Eingangsschnittstelle 12 kann beispielsweise einem oder mehreren Eingängen zum Empfangen von Informationen entsprechen, etwa in digitalen Bitwerten, basierend auf einem Code, innerhalb eines Moduls, zwischen Modulen, oder zwischen Modulen verschiedener Entitäten. Die Eingangsschnittstelle 12 kann beispielsweise eine eigenständige Hardwareeinheit (z.B. ein an einen Kommunikationsbus angeschlossener Empfänger) oder auch Teil des Prozessors 14 (z.B. Eingangsschnittstelle des Prozessors 14) sein.

In zumindest einigen Beispielen kann das Eingabesignal beispielsweise von einem Berührungsempfindlichen Sensor bereitgestellt werden, etwa von einem kapazitiven Berührungssensor, einem resistiven Berührungssensor, einem optischen oder einem akustischen Berührungssensor. Die Information über die zumindest eine Position der Berührung der Anzeigeeinrichtung 100 kann beispielsweise auf einer Berührung eines Berührungssensors oder einer vor den berührungsempfindlichen Sensor vorgeschalteten Schutzschicht basieren. Die Information über die berührungslose Geste kann beispielsweise über einen kapazitiven Berührungssensor, welcher ausgebildet ist, um kapazitive Veränderungen vor der Berührung zu erkennen, oder einen optischen oder akustischen Sensor, beispielsweise basierend auf einem Laufzeitverfahren oder basierend auf einer anderen Analyse reflektierten Lichts oder Schalls bereitgestellt werden.

Die Anzeigeeinrichtung 100 kann beispielsweise ein Bildschirm oder andere visuelle Wiedergabeeinrichtung sein, auf der basierend auf dem Video- oder Steuersignal für den Benutzer sichtbar veränderbarer Inhalt angezeigt werden kann, etwa der Anzeigebereich 30. Die Anzeigeeinrichtung 100 kann beispielsweise einen TFT-Bildschirm (Thin Film Transistor, Dämmschichttransistor), einen berührungsempfindlicher Bildschirm, einen sogenannten Touchscreen oder ein Head-Up-Display (Kopf-Hoch-Anzeigesystem) umfassen, der z.B. in einer Mittelkonsole eines Fahrzeugs oder vom Benutzer aus gesehen hinter dem Lenkrad eines Fahrzeugs im Bereich des Armaturenbretts angeordnet ist.

Der Prozessor 14 kann beispielsweise einer programmierbaren Hardwarekomponente entsprechen, beispielsweise einem Zentralprozessor eines Computersystems, einem Digitalen Signal-Prozessor (DSP), einem mobilen Prozessor, oder einer Recheneinheit eines Ein-Chip-Systems (auch engl. System-on-a-Chip, SoC), z.B. einem Prozessor eines Bordcomputers eines Fahrzeugs.

Das Video- oder Steuersignal kann z.B. ein elektronisches, ein optisches oder ein Radiosignal sein. Der Prozessor 14 kann z.B. das Videosignal oder das Steuersignal in einem Format bereitstellen, das von der jeweiligen Anzeigeeinrichtung (z.B. die Anzeigeeinrichtung 100) zur Wiedergabe von Informationen (z.B. in Form von Bildern) verarbeitet werden kann.

Die Ausgangseinrichtung 16 kann beispielsweise eine eigenständige Hardwareeinheit (z.B. ein an einen Kommunikationsbus angeschlossener Sender) oder auch Teil des Prozessors 14 (z.B. Ausgangsschnittstelle des Prozessors 12) sein. Die Ausgangseinrichtung 16 kann beispielsweise einem oder mehreren Ausgängen zum Übertragen von Informationen entsprechen, etwa in digitalen Bitwerten, basierend auf einem Code, innerhalb eines Moduls, zwischen Modulen, oder zwischen Modulen verschiedener Entitäten.

In zumindest manchen Beispielen kann der Prozessor 14 ausgebildet sein, das Video- oder Steuersignal zu erzeugen, so dass eine repräsentierende Darstellung der ausgewählten einstellbaren Funktion auf dem Anzeigebereich 30 dargestellt wird. Die repräsentierende Darstellung der ausgewählten einstellbaren Funktion kann beispielsweise einem Piktogramm der ausgewählten einstellbaren Funktion, einer textuelle Darstellung der ausgewählten einstellbaren Funktion oder einem Piktogramm einer Einrichtung, welches die ausgewählte Funktion bewirkt, entsprechen. Beispielsweise könnte etwa die repräsentierende Darstellung einer Sitzbeheizung einem zumindest teilweise rot eingefärbten Sitz des Fahrzeugs entsprechen, oder die repräsentierende Darstellung einer Lüftung könnte einem Piktogramm eines Lüfters entsprechen.

In zumindest einigen Beispielen kann der Prozessor 14 ausgebildet sein, das Video- oder Steuersignal zu erzeugen, so dass eine repräsentierende Darstellung des eingestellten Werts der ausgewählten einstellbaren Funktion auf dem Anzeigebereich 30 dargestellt wird. Die repräsentierende Darstellung des Werts könnte beispielsweise einer Darstellung einer Zahl, einer Darstellung eines Balkendiagramms, einer Darstellung eines Schiebereglers, einer Darstellung eines Tortendiagramms, oder einer Darstellung eines Drehreglers entsprechen.

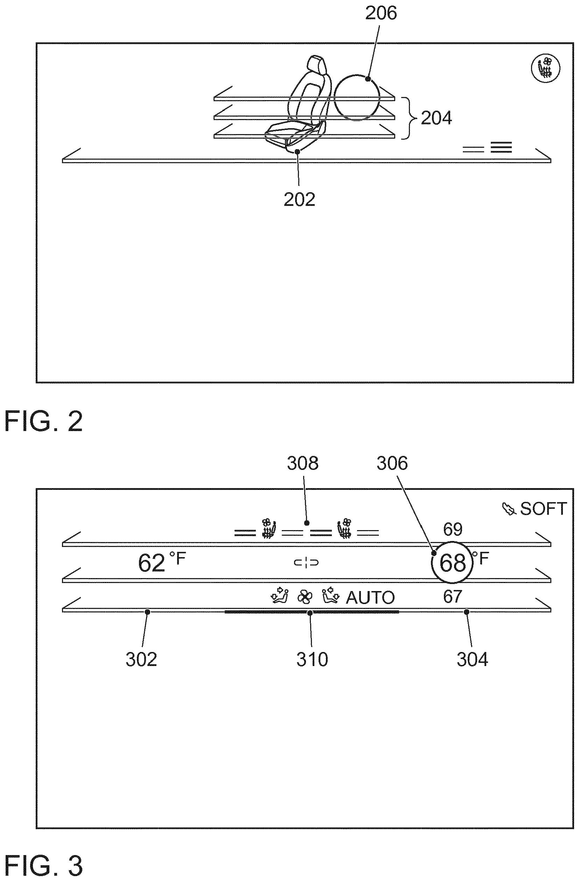

Fig. 2 zeigt eine beispielhafte Darstellung des Anzeigebereichs 30. Der Anzeigebereich 30 umfasst eine repräsentierende Darstellung der ausgewählten einstellbaren Funktion 202, dargestellt als Fahrzeugsitz, welcher eine Sitzheizung repräsentiert. Der Anzeigebereich 30 umfasst ferner die repräsentierende Darstellung des Werts 204, als schematische Darstellung eines Balkendiagramms mit 3 Balkenstufen. Durch eine Bewegung 206 in der zweiten Richtung, beispielsweise in der vertikalen Richtung, könnte ein Benutzer den Wert, und damit die Anzahl der Balkenstufen, verändern.

In einigen Beispielen kann der Prozessor 14 ausgebildet sein, das Video- oder Steuersignal zu erzeugen, so dass die repräsentierende Darstellung der ausgewählten einstellbaren Funktion zumindest 20% des Anzeigebereichs 30 einnimmt. Die repräsentierende Darstellung der ausgewählten einstellbaren Funktion könnte beispielsweise 20%, 30%, 40%, 50%, 60%, 70%, 80% oder 90% des Anzeigebereichs einnehmen.

In zumindest manchen Beispielen kann der Prozessor 14 ausgebildet sein, das Video- oder Steuersignal zu erzeugen, so dass zusätzlich zu der repräsentierenden Darstellung der ausgewählten einstellbaren Funktion zumindest eine weitere repräsentierende Darstellung zumindest einer weiteren einstellbaren Funktion der Mehrzahl von einstellbaren Funktionen auf dem Anzeigebereich 30 dargestellt wird.

Fig. 3 zeigt eine weitere beispielhafte Darstellung des Anzeigebereichs 30. Der Anzeigebereich 30 umfasst die repräsentierende Darstellung der auswählbaren Funktion 304, beispielsweise eine repräsentierende Darstellung der einstellbaren Funktion Teilbereichstemperatur Beifahrer, und die repräsentierende Darstellung des Werts 306, beispielsweise eine Darstellung der Temperatur als Ziffern auf einem veränderbaren Einstellrad. Zusätzlich umfasst der Anzeigebereich 30 die weitere repräsentierende Darstellung 302 der weiteren einstellbaren Funktion, beispielsweise eine repräsentierende Darstellung der einstellbaren Funktion Teilbereichstemperatur Fahrer. Zusätzlich umfasst der Anzeigebereich ferner weitere repräsentierende Darstellungen von Funktionen, etwa repräsentierende Darstellungen der einstellbaren Funktionen Sitzheizung Fahrer / Beifahrer 308, welche beispielsweise separat oder zusammen auswählbar sein können, und repräsentierende Darstellungen der einstellbaren Funktion Lüftung 310.

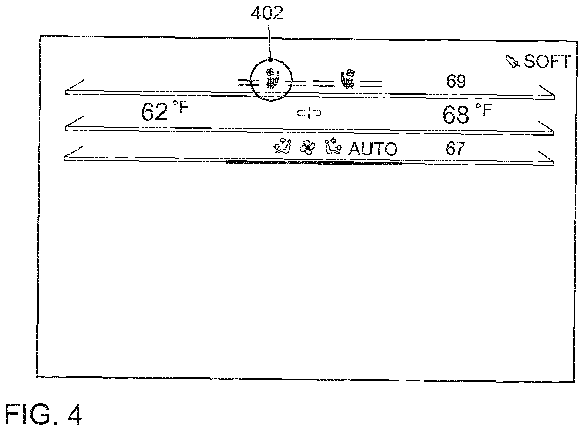

In zumindest einigen Beispielen kann der Anzeigebereich 30 zumindest zwei repräsentative Darstellungen von zumindest zwei einstellbaren Funktionen der Mehrzahl von einstellbaren Funktionen der Klimasteuerung des Fahrzeugs umfassen. Der Prozessor 14 kann ausgebildet sein, um basierend auf dem Eingabesignal zumindest eine der zumindest zwei einstellbaren Funktionen der Klimasteuerung auszuwählen. In zumindest manchen Beispielen kann die Auswahl auf der zumindest einen Position der Berührung basieren. Der Prozessor 14 kann ausgebildet sein, die zumindest eine einstellbare Funktion auszuwählen, falls die Information über die zumindest eine Berührung eine Übereinstimmung mit einer Position der repräsentierenden Darstellung der zumindest einen einstellbaren Funktion oder eine Übereinstimmung mit einem Auswahlbereich der repräsentierenden Darstellung der zumindest einen einstellbaren Funktion ergibt. Fig. 4 zeigt eine weitere beispielhafte Darstellung des Anzeigebereichs 30. Durch eine Auswahl 402 der repräsentierenden Darstellung der einstellbaren Funktion Sitzheizung Fahrer könnte der Benutzer beispielsweise auslösen, dass der Prozessor 14 das Video- oder Steuersignal erzeugt, so dass eine weitere repräsentierende Darstellung der einstellbaren Funktion Sitzheizung Fahrer und eine repräsentierende Darstellung des Werts der einstellbaren Funktion Sitzheizung auf dem Anzeigebereich 30 dargestellt wird, wie etwa in Fig. 2.

In zumindest manchen Beispielen könnten zumindest zwei einstellbare Funktionen der Mehrzahl von einstellbaren Funktionen verschiedene Eigenschaften der Klimasteuerung eines Elements der Fahrzeugs entsprechen. Der Prozessor 14 könnte ausgebildet sein, basierend auf einer in der ersten Richtung bestimmten Bewegung eine einstellbare Funktion der zumindest zwei einstellbaren Funktionen des Elements des Fahrzeugs auszuwählen. Das Element des Fahrzeugs könnte beispielsweise einem Sitz des Fahrzeugs entsprechen. Die zumindest zwei einstellbaren Funktionen könnten beispielsweise eine Sitzheizung des Sitzes und eine Sitzbelüftung des Sitzes umfassen.

Das Element des Fahrzeugs könnte ferner beispielsweise einer Scheibe des Fahrzeugs entsprechen. Die zumindest zwei einstellbaren Funktionen könnten eine Scheibenheizung der Scheibe und eine Scheibenbelüftung der Scheibe umfassen.

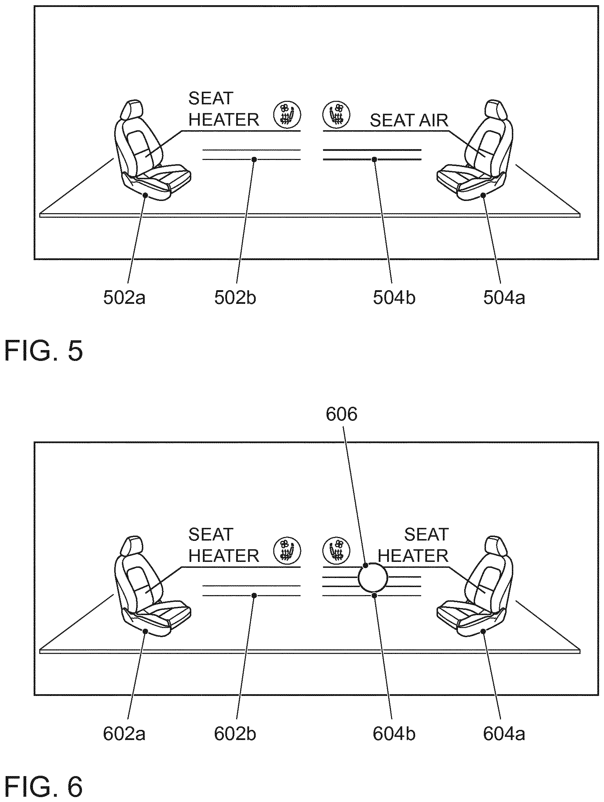

Die Figuren 5 und 6 zeigen weitere beispielhafte Darstellungen des Anzeigebereichs 30. Fig. 5 zeigt eine repräsentierende Darstellung 502a der einstellbaren Funktion Sitzheizung Fahrer und eine repräsentierende Darstellung 502b des Werts der einstellbaren Funktion Sitzheizung Fahrer. Fig. 5 zeigt ferner eine repräsentierende Darstellung 504a der einstellbaren Funktion Sitzlüftung und eine repräsentierende Darstellung 504b des Werts der einstellbaren Funktion Sitzlüftung. Die repräsentierenden Darstellungen der Werte der einstellbaren Funktionen können sich bei unterschiedlichen einstellbaren Funktionen unterscheiden, beispielsweise unterschiedliche Farben oder Musterungen aufweisen. Fig. 6 zeigt ebenfalls eine repräsentierende Darstellung 602a der einstellbaren Funktion Sitzheizung Fahrer und eine repräsentierende Darstellung 602b des Werts der einstellbaren Funktion Sitzheizung Fahrer. Durch eine bestimmte Bewegung 606 in der ersten Richtung, beispielsweise in der horizontalen Richtung, könnte ein Benutzer beispielsweise zwischen den verschiedenen Funktionen des Elements Beifahrersitz wechseln, beispielsweise zwischen der repräsentierenden Darstellung 504a der einstellbaren Funktion Sitzlüftung Beifahrersitz von Fig. 5 und der repräsentierenden Darstellung 604a der einstellbaren Funktion Sitzheizung Beifahrersitz von Fig. 6, mit der repräsentierenden Darstellung 604b des Werts der einstellbaren Funktion Sitzheizung Beifahrersitz.

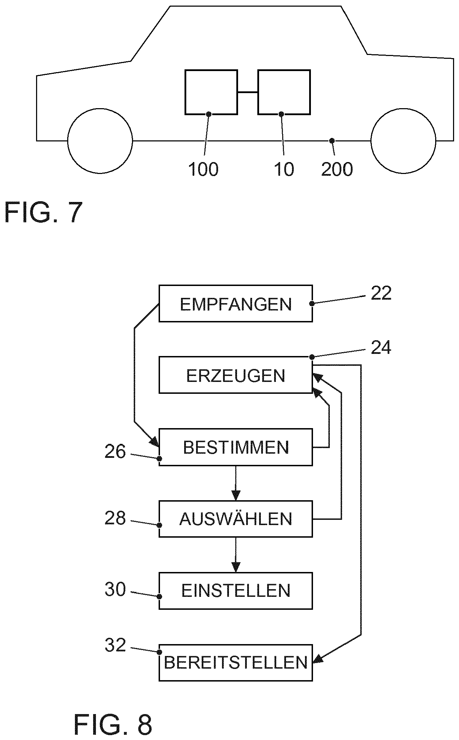

Fig. 7 illustriert ein Blockdiagramm eines Beispiels eines Fahrzeugs 200, das eine Vorrichtung 10 zur Klimasteuerung nach dem beschriebenen Konzept oder einem der zuvor oder im Folgenden beschriebenen Beispiele und eine Anzeigeeinrichtung 100 aufweist. Bei dem Fahrzeug 200 kann es sich beispielsweise um ein Kraftfahrzeug handeln, beispielsweise um ein Automobil, einen Transporter, einen Omnibus oder einen Lastkraftwagen oder ein weiteres Landfahrzeug. Beispielsweise könnte das Fahrzeug auch einem Luftfahrzeug, einem Wasserfahrzeug, etwa einem Schiff, oder einem Schienenfahrzeug entsprechen. Die Vorrichtung 10 zur Klimasteuerung kann ausgebildet sein, eine Klimasteuerung für das Fahrzeug 200 bereitzustellen. Die Vorrichtung 10 kann beispielsweise ausgebildet sein, der Anzeigeeinrichtung 100 ein Video- oder Steuersignal bereitzustellen.

Mehr Details und Aspekte des Fahrzeugs 200 (z.B. Vorrichtung 10, Anzeigeeinrichtung 100, Video- oder Steuersignal) werden in Verbindung mit dem Konzept oder Beispielen genannt, die vorher (z.B. Fig. 1 bis 6) beschrieben wurden. Das Fahrzeug 200 kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Fig. 8 zeigt ein Flussdiagramm eines Verfahrens zur Klimasteuerung in einem Fahrzeug. Das Verfahren umfasst Empfangen 22 eines Eingabesignals. Das Eingabesignal umfasst Information über zumindest eine Position einer Berührung einer Anzeigeeinrichtung 100 oder Information über eine berührungslose Geste. Das Verfahren umfasst ferner Erzeugen 24 eines Video- oder Steuersignals, sodass ein Anzeigebereich 30 durch die Anzeigeeinrichtung 100 wiedergebbar ist. Das Verfahren umfasst ferner Bestimmen 26 einer Bewegung relativ zum Anzeigebereich 30 basierend auf dem Eingabesignal. Das Verfahren umfasst ferner Auswählen 28 einer einstellbaren Funktion einer Mehrzahl von einstellbaren Funktionen einer Klimasteuerung des Fahrzeugs basierend auf einer in einer ersten Richtung bestimmten Bewegung. Das Verfahren umfasst ferner Einstellen 32 eines Werts der ausgewählten einstellbaren Funktion basierend auf einer in einer im Wesentlichen zur ersten Richtung orthogonalen zweiten Richtung bestimmten Bewegung. Das Verfahren umfasst ferner Bereitstellen 34 des Video- oder Steuersignals der Anzeigeeinrichtung 100.

Durch die Nutzung der zwei zueinander orthogonalen Bewegungsrichtungen kann eine intuitive Bedienung der Klimasteuerung erreicht werden. Durch die Nutzung von Wischgesten, im Gegensatz zur Auswahl über Schaltfläche, kann eine beiläufige Bedienung erreicht werden, die in bestimmen Fällen ohne eine visuelle Kontrolle des Ergebnisses durchgeführt werden kann.

Durch das beschriebene Konzept kann die Benutzungssicherheit einer Klimasteuerung in einem Fahrzeug erhöht werden, da der Benutzer auf einfache, übersichtliche und möglicherweise beiläufige Art und Weise die von ihm benötigten oder gewünschten Funktionen einstellen kann. Dadurch kann sich der Benutzer beispielsweise insgesamt besser auf das Steuern des Fahrzeugs konzentrieren und trotzdem die gewünschten Funktionen bedienen.

Mehr Details und Aspekte des Verfahrens zur Klimasteuerung (z.B. Eingabesignal, Information über zumindest eine Position einer Berührung einer Anzeigeeinrichtung 100, Anzeigeeinrichtung 100, Information über eine berührungslose Geste, Video- oder Steuersignal, Anzeigebereich 30, Bewegung relativ zum Anzeigebereich 30, Mehrzahl von einstellbaren Funktionen, erste Richtung, zweite Richtung) werden in Verbindung mit dem Konzept oder Beispielen genannt, die vorher (z.B. Fig. 1 bis 7) beschrieben wurden. Das Verfahren zur Klimasteuerung kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Ein weiteres Beispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Beispiel ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Beispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Beispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammen-wirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Beispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Beispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Beispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Beispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Beispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Beispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeiten-den Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Beispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Beispiele hierin präsentiert wurden, beschränkt sei.

### Bezugszeichenliste

- 10: Vorrichtung zur Klimasteuerung in einem Fahrzeug
- 12: Eingangsschnittstelle
- 14: Prozessor
- 16: Ausgangseinrichtung
- 22: Empfangen
- 24: Erzeugen
- 26: Bestimmen
- 28: Auswählen
- 30: Anzeigebereich
- 32: Einstellen
- 34: Bereitstellen
- 100: Anzeigeeinrichtung
- 200: Fahrzeug
- 202: Repräsentierende Darstellung einer ausgewählten einstellbaren Funktion
- 204: Repräsentierende Darstellung eines Werts einer ausgewählten einstellbaren Funktion
- 206: Bewegung
- 302: Repräsentierende Darstellung einer einstellbaren Funktion
- 304: Repräsentierende Darstellung einer einstellbaren Funktion
- 306: Repräsentierende Darstellung eines Werts einer ausgewählten einstellbaren Funktion
- 308: Repräsentierende Darstellungen von einstellbaren Funktionen
- 310: Repräsentierende Darstellungen von einstellbaren Funktionen
- 402: Auswahl einer einstellbaren Funktion
- 502a: Repräsentierende Darstellung einer einstellbaren Funktion Sitzheizung Fahrer
- 502b: Repräsentierende Darstellung eines Werts einer einstellbaren Funktion Sitzheizung Fahrer
- 504a: Repräsentierende Darstellung einer einstellbaren Funktion Sitzlüftung Beifahrer
- 504b: Repräsentierende Darstellung eines Werts einer einstellbaren Funktion Sitzlüftung Beifahrer
- 602a: Repräsentierende Darstellung einer einstellbaren Funktion Sitzheizung Fahrer
- 602b: Repräsentierende Darstellung eines Werts einer einstellbaren Funktion Sitzheizung Fahrer
- 604a: Repräsentierende Darstellung einer einstellbaren Funktion Sitzheizung Beifahrer
- 604b: Repräsentierende Darstellung eines Werts einer einstellbaren Funktion Sitzheizung Beifahrer
- 606: Bestimmte Bewegung

## Patentansprüche

1. Vorrichtung (10) zur Klimasteuerung in einem Fahrzeug, mit folgenden Merkmalen:
einer Eingangsschnittstelle (12), die ausgebildet ist, um ein Eingabesignal zu empfangen, wobei das Eingabesignal Information über eine berührungslose Geste umfasst,
einem Prozessor (14), der ausgebildet ist, um ein Video- oder Steuersignal derart zu erzeugen, dass ein Anzeigebereich (30) durch eine Anzeigeeinrichtung (100) wiedergebbar ist,
wobei der Prozessor (14) ausgebildet ist, um basierend auf dem Eingabesignal eine Bewegung relativ zum Anzeigebereich (30) zu bestimmen, einer Ausgangseinrichtung (16), die ausgebildet ist, um das Video- oder Steuersignal der Anzeigeeinrichtung (100) bereitzustellen, die Vorrichtung (10) **dadurch gekennzeichnet, dass** der Prozessor (14) ausgebildet ist, basierend auf einer in einer ersten Richtung bestimmten Bewegung eine einstellbare Funktion einer Mehrzahl von einstellbaren Funktionen einer Klimasteuerung des Fahrzeugs auszuwählen,
wobei der Prozessor (14) ausgebildet ist, basierend auf einer in einer im Wesentlichen zur ersten Richtung orthogonalen zweiten Richtung bestimmten Bewegung einen Wert der ausgewählten einstellbaren Funktion einzustellen.

2. Die Vorrichtung (10) gemäß Anspruch 1, wobei der Prozessor (14) ausgebildet ist, das Video- oder Steuersignal derart zu erzeugen, dass eine repräsentierende Darstellung der ausgewählten einstellbaren Funktion auf dem Anzeigebereich (30) dargestellt wird.

3. Die Vorrichtung (10) gemäß Anspruch gemäß Anspruch 2, wobei der Prozessor (14) ausgebildet ist, das Video- oder Steuersignal derart zu erzeugen, dass zusätzlich zu der repräsentierenden Darstellung der ausgewählten einstellbaren Funktion zumindest eine weitere repräsentierende Darstellung zumindest einer weiteren einstellbaren Funktion der Mehrzahl von einstellbaren Funktionen auf dem Anzeigebereich (30) dargestellt wird.

4. Die Vorrichtung (10) gemäß einem der vorhergehenden Ansprüche, wobei der Prozessor (14) ausgebildet ist, das Video- oder Steuersignal derart zu erzeugen, dass eine repräsentierende Darstellung des eingestellten Werts der ausgewählten einstellbaren Funktion auf dem Anzeigebereich (30) dargestellt wird.

5. Die Vorrichtung (10) gemäß einem der vorhergehenden Ansprüche, wobei der Anzeigebereich (30) zumindest zwei repräsentative Darstellungen von zumindest zwei einstellbaren Funktionen der Mehrzahl von einstellbaren Funktionen der Klimasteuerung des Fahrzeugs umfasst, wobei der Prozessor (14) ausgebildet ist, um basierend auf dem Eingabesignal zumindest eine der zumindest zwei einstellbaren Funktionen der Klimasteuerung auszuwählen.

6. Die Vorrichtung (10) gemäß einem der vorhergehenden Ansprüche, wobei die erste Richtung einer vom Benutzer aus gesehen horizontalen Richtung entspricht und wobei die zweite Richtung einer vom Benutzer aus gesehen vertikalen Richtung entspricht.

7. Die Vorrichtung (10) gemäß Anspruch 5, wobei der Prozessor ausgebildet ist, den Wert der ausgewählten einstellbaren Funktion basierend auf einer vom Benutzer aus gesehen nach oben gerichteten Bewegung zu erhöhen und den Wert der ausgewählten einstellbaren Funktion basierend auf einer vom Benutzer aus gesehen nach unten gerichteten Bewegung zu verringern.

8. Die Vorrichtung (10) gemäß einem der vorhergehenden Ansprüche, wobei zumindest zwei einstellbare Funktionen der Mehrzahl von einstellbaren Funktionen verschiedene Eigenschaften der Klimasteuerung eines Elements des Fahrzeugs entsprechen, und wobei der Prozessor (14) ausgebildet ist, basierend auf einer in der ersten Richtung bestimmten Bewegung eine einstellbare Funktion der zumindest zwei einstellbaren Funktionen des Elements des Fahrzeugs auszuwählen.

9. Die Vorrichtung (10) gemäß einem der vorhergehenden Ansprüche, wobei die Mehrzahl von auswählbaren Funktionen zumindest ein Element der Gruppe von Gesamtklima des Fahrzeugs, Teilbereichsklima des Fahrzeugs, Gesamttemperatur des Fahrzeugs, Teilbereichstemperatur des Fahrzeugs, Gesamtlüftung des Fahrzeugs, Teilbereichslüftung des Fahrzeugs, Scheibenheizung des Fahrzeugs, Scheibenlüftung des Fahrzeugs, Sitzheizung des Fahrzeugs und Sitzlüftung des Fahrzeugs umfasst.

10. Die Vorrichtung (10) gemäß einem der vorhergehenden Ansprüche, wobei der Anzeigebereich bei Auswahl einer einstellbaren Funktion der Mehrzahl von einstellbaren Funktionen oder bei Einstellen eines Werts der einstellbaren Funktion ausschließlich repräsentierende Darstellungen von Funktionen, Werten oder Klimainformationen der Klimasteuerung darstellt.

11. Fahrzeug (200), das die Vorrichtung (10) zur Klimasteuerung gemäß einem der vorhergehenden Ansprüche und die Anzeigeeinrichtung (100) aufweist.

12. Verfahren zur Klimasteuerung in einem Fahrzeug, mit folgenden Merkmalen:
Empfangen (22) eines Eingabesignals, wobei das Eingabesignal Information über eine berührungslose Geste umfasst,
Erzeugen (24) eines Video- oder Steuersignals derart, dass ein Anzeigebereich (30) durch eine Anzeigeeinrichtung (100) wiedergebbar ist,
Bestimmen (26) einer Bewegung relativ zum Anzeigebereich (30) basierend auf dem Eingabesignal,
Auswählen (28) einer einstellbaren Funktion einer Mehrzahl von einstellbaren Funktionen einer Klimasteuerung des Fahrzeugs basierend auf einer in einer ersten Richtung bestimmten Bewegung, Einstellen (32) eines Werts der ausgewählten einstellbaren Funktion basierend auf einer in einer im Wesentlichen zur ersten Richtung orthogonalen zweiten Richtung bestimmten Bewegung, und
Bereitstellen (34) des Video- oder Steuersignals der Anzeigeeinrichtung (100).

13. Programm mit einem Programmcode zum Durchführen des Verfahrens nach Anspruch 12 wenn der Programmcode auf einem Computer, einem Prozessor, einem Kontrollmodul oder einer programmierbaren Hardwarekomponente ausgeführt wird.

## Claims

1. Climate control apparatus (10) in a vehicle, having the following features:
an input interface (12) which is designed to receive an input signal, wherein the input signal comprises information relating to a contactless gesture,
a processor (14) which is designed to generate a video or control signal in such a manner that a display area (30) can be displayed by a display device (100),
wherein the processor (14) is designed to determine a movement relative to the display area (30) on the basis of the input signal,
an output device (16) which is designed to provide the display device (100) with the video or control signal,
the apparatus (10) **characterized in that**
the processor (14) is designed to select an adjustable function of a plurality of adjustable functions of a climate control system of the vehicle on the basis of a movement determined in a first direction,
wherein the processor (14) is designed to adjust a value of the selected adjustable function on the basis of a movement determined in a second direction substantially orthogonal to the first direction.

2. Apparatus (10) according to Claim 1, wherein the processor (14) is designed to generate the video or control signal in such a manner that a representational presentation of the selected adjustable function is presented in the display area (30).

3. Apparatus (10) according to Claim 2, wherein the processor (14) is designed to generate the video or control signal in such a manner that, in addition to the representational presentation of the selected adjustable function, at least one further representational presentation of at least one further adjustable function of the plurality of adjustable functions is presented in the display area (30).

4. Apparatus (10) according to one of the preceding claims, wherein the processor (14) is designed to generate the video or control signal in such a manner that a representational presentation of the adjusted value of the selected adjustable function is presented in the display area (30).

5. Apparatus (10) according to one of the preceding claims, wherein the display area (30) comprises at least two representational presentations of at least two adjustable functions of the plurality of adjustable functions of the climate control system of the vehicle, wherein the processor (14) is designed to select at least one of the at least two adjustable functions of the climate control system on the basis of the input signal.

6. Apparatus (10) according to one of the preceding claims, wherein the first direction corresponds to a horizontal direction as seen from the user, and wherein the second direction corresponds to a vertical direction as seen from the user.

7. Apparatus (10) according to Claim 5, wherein the processor is designed to increase the value of the selected adjustable function on the basis of an upwardly directed movement as seen from the user and to reduce the value of the selected adjustable function on the basis of a downwardly directed movement as seen from the user.

8. Apparatus (10) according to one of the preceding claims, wherein at least two adjustable functions of the plurality of adjustable functions correspond to different properties of the climate control of an element of the vehicle, and wherein the processor (14) is designed to select an adjustable function of the at least two adjustable functions of the element of the vehicle on the basis of a movement determined in the first direction.

9. Apparatus (10) according to one of the preceding claims, wherein the plurality of selectable functions comprise at least one element of the group of the overall climate of the vehicle, sectional climate of the vehicle, overall temperature of the vehicle, sectional temperature of the vehicle, overall ventilation of the vehicle, sectional ventilation of the vehicle, window heating of the vehicle, window ventilation of the vehicle, seat heating of the vehicle and seat ventilation of the vehicle.

10. Apparatus (10) according to one of the preceding claims, wherein the display area presents only representational presentations of functions, values or climate information of the climate control system when selecting an adjustable function of the plurality of adjustable functions or when adjusting a value of the adjustable function.

11. Vehicle (200) which has the climate control apparatus (10) according to one of the preceding claims and the display device (100).

12. Climate control method in a vehicle, having the following features:
receiving (22) an input signal, wherein the input signal comprises information relating to a contactless gesture,
generating (24) a video or control signal in such a manner that a display area (30) can be displayed by a display device (100),
determining (26) a movement relative to the display area (30) on the basis of the input signal,
selecting (28) an adjustable function of a plurality of adjustable functions of a climate control system of the vehicle on the basis of a movement determined in a first direction,
adjusting (32) a value of the selected adjustable function on the basis of a movement determined in a second direction substantially orthogonal to the first direction, and
providing (34) the display device (100) with the video or control signal.

13. Program having a program code for carrying out the method according to Claim 12 when the program code is executed on a computer, a processor, a control module or a programmable hardware component.

## Revendications

1. Arrangement (10) de commande de climatisation dans un véhicule, ayant les caractéristiques suivantes :
une interface d'entrée (12) qui est configurée pour recevoir un signal d'entrée, le signal d'entrée comportant des informations à propos d'un geste sans contact,
un processeur (14) qui est configuré pour générer un signal vidéo ou de commande de telle sorte qu'une zone d'affichage (30) peut être reproduite par un dispositif d'affichage (100),
le processeur (14) étant configuré pour déterminer un mouvement par rapport à la zone d'affichage (30) en se basant sur le signal d'entrée,
un dispositif de sortie (16) qui est configuré pour fournir le signal vidéo ou de commande au dispositif d'affichage (100),
l'arrangement (10) étant **caractérisé en ce que**
le processeur (14) est configuré pour sélectionner, en se basant sur un mouvement déterminé dans une première direction, une fonction réglable parmi une pluralité de fonctions réglables d'une commande de climatisation du véhicule,
le processeur (14) étant configuré pour régler une valeur de la fonction réglable sélectionnée en se basant sur un mouvement déterminé dans une deuxième direction sensiblement orthogonale par rapport à la première direction.

2. Arrangement (10) selon la revendication 1, le processeur (14) étant configuré pour générer le signal vidéo ou de commande de telle sorte qu'une visualisation représentative de la fonction réglable sélectionnée est visualisée sur la zone d'affichage (30) .

3. Arrangement (10) selon la revendication 2, le processeur (14) étant configuré pour générer le signal vidéo ou de commande de telle sorte qu'au moins une visualisation représentative supplémentaire d'au moins une fonction réglable supplémentaire parmi la pluralité de fonctions réglables est visualisée sur la zone d'affichage (30) en plus de la visualisation représentative de la fonction réglable sélectionnée.

4. Arrangement (10) selon l'une des revendications précédentes, le processeur (14) étant configuré pour générer le signal vidéo ou de commande de telle sorte qu'une visualisation représentative de la valeur réglée de la fonction réglable sélectionnée est visualisée sur la zone d'affichage (30).

5. Arrangement (10) selon l'une des revendications précédentes, la zone d'affichage (30) comportant au moins deux visualisations représentatives d'au moins deux fonctions réglables parmi la pluralité de fonctions réglables de la commande de climatisation du véhicule, le processeur (14) étant configuré pour sélectionner au moins l'une des au moins deux fonctions réglables de la commande de climatisation en se basant sur le signal d'entrée.

6. Arrangement (10) selon l'une des revendications précédentes, la première direction correspondant à une direction horizontale du point de vue de l'utilisateur et la deuxième direction correspondant à une direction verticale du point de vue de l'utilisateur.

7. Arrangement (10) selon la revendication 5, le processeur étant configuré pour augmenter la valeur de la fonction réglable sélectionnée en se basant sur un mouvement dirigé vers le haut du point de vue de l'utilisateur et pour réduire la valeur de la fonction réglable sélectionnée en se basant sur un mouvement dirigé vers le bas du point de vue de l'utilisateur.

8. Arrangement (10) selon l'une des revendications précédentes, au moins deux fonctions réglables de la pluralité de fonctions réglables correspondant à des propriétés différentes de la commande de climatisation d'un élément du véhicule, et le processeur (14) étant configuré pour sélectionner, en se basant sur un mouvement déterminé dans la première direction, une fonction réglable parmi les au moins deux fonctions réglables de l'élément du véhicule.

9. Arrangement (10) selon l'une des revendications précédentes, la pluralité de fonctions pouvant être sélectionnées comprenant au moins un élément du groupe climatisation globale du véhicule, climatisation de zone partielle du véhicule, température globale du véhicule, température de zone partielle du véhicule, ventilation globale du véhicule, ventilation de zone partielle du véhicule, chauffage des vitres du véhicule, ventilation des vitres du véhicule, chauffage des sièges du véhicule et ventilation des sièges du véhicule.

10. Arrangement (10) selon l'une des revendications précédentes, la zone d'affichage, lors de la sélection d'une fonction réglable parmi la pluralité de fonctions réglables ou lors du réglage d'une valeur de la fonction réglable, visualisant exclusivement des visualisations représentatives de fonctions, de valeurs ou d'informations de climatisation de la commande de climatisation.

11. Véhicule (200) qui possède l'arrangement (10) de commande de climatisation selon l'une des revendications précédentes et le dispositif d'affichage (100) .

12. Procédé de commande de climatisation dans un véhicule, ayant les caractéristiques suivantes :
réception (22) d'un signal d'entrée, le signal d'entrée comportant des informations à propos d'un geste sans contact,
génération (24) d'un signal vidéo ou de commande de telle sorte qu'une zone d'affichage (30) peut être reproduite par un dispositif d'affichage (100),
détermination (26) d'un mouvement par rapport à la zone d'affichage (30) en se basant sur le signal d'entrée,
sélection (28) d'une fonction réglable parmi une pluralité de fonctions réglables d'une commande de climatisation du véhicule en se basant sur un mouvement déterminé dans une première direction,
réglage (32) d'une valeur de la fonction réglable sélectionnée en se basant sur un mouvement déterminé dans une deuxième direction sensiblement orthogonale par rapport à la première direction, et
fourniture (34) du signal vidéo ou de commande au dispositif d'affichage (100).

13. Programme comprenant un code de programme destiné à mettre en oeuvre le procédé selon la revendication 12 lorsque le code de programme est exécuté sur un ordinateur, un processeur, un module de contrôle ou un composant matériel programmable.
